# EUROPÄISCHE PATENTSCHRIFT

(11) **EP 3 380 726 B1**
(45) Veröffentlichungstag und Bekanntmachung des Hinweises auf die Patenterteilung: **26.04.2023**
(21) Anmeldenummer: 16797798.2
(22) Anmeldetag: 09.11.2016
(51) Int. Cl.: F03D 17/00, F03D 7/04, F03D 9/25

(54) **VERFAHREN ZUM GRAFISCHEN DARSTELLEN VON SENSORDATEN MEHRERER WINDENERGIEANLAGEN SOWIE VORRICHTUNG HIERFÜR UND SYSTEM DAMIT**
METHOD FOR GRAPHICALLY PRESENTING SENSOR DATA OF MULTIPLE WIND TURBINES, DEVICE FOR THIS PURPOSE, AND SYSTEM COMPRISING SAID DEVICE
PROCÉDÉ DE REPRÉSENTATION GRAPHIQUE DE DONNÉES DE CAPTEUR DE PLUSIEURS ÉOLIENNES AINSI QUE DISPOSITIF ET SYSTÈME ASSOCIÉS

(30) Priorität: 24.11.2015 DE 102015120307
(43) Veröffentlichungstag der Anmeldung: 03.10.2018
(73) Patentinhaber: Wobben Properties GmbH, 26607 Aurich (DE)
(72) Erfinder: DEMUTH, Simon, 26524 Hage (DE)
(74) Vertreter: Eisenführ Speiser
(86) Internationale Anmeldenummer: PCT/EP2016/077036
(87) Internationale Veröffentlichungsnummer: WO 2017/089130

(56) Entgegenhaltungen:
- US-A1- 2004 021 687
- US-A1- 2009 210 071
- US-B2- 8 433 425

## Beschreibung

Die Erfindung betrifft die Darstellung von Sensordaten, die mit Sensoren von Windenergieanlagen aufgenommen werden.

Gemäß dem Stand der Technik weist jede Windenergieanlage mehrere verschiedene Sensoren auf, um Betriebsparameter und/oder Umgebungsbedingungen anhand von Messwerten aufzunehmen. Die hierzu aktuell gemessenen Werte, die in Form von Sensorsignalen vorliegen, dienen zum Beispiel für die Steuerung und/oder Regelung der Windenergieanlage im aktuellen Zeitpunkt. Ferner werden aber auch Sensordaten zum Beispiel für einen Servicedienst oder den Windenergieanlagenbetreiber zur Verfügung gestellt, um im Fehlerfall von Normwerten abweichende Sensorwerte zu detektieren und somit den Fehlerort lokalisieren zu können.

Ein Betreiber hat auch häufig Zugriff auf die in der Vergangenheit liegenden Sensorwerte einer oder mehrerer seiner Windenergieanlagen, um auch im Nachhinein zum Beispiel in bestimmten Zeiträumen erzeugte elektrische Leistung abfragen zu können.

Aufgrund günstiger Speichertechnologie werden demnach umfangreiche Sammlungen von Sensorwerten in jeder Windenergieanlage für einen langen zurückliegenden Zeitraum abgespeichert und bleiben im Wesentlichen ungenutzt.

Die Dokumente US 8,433,425 B2 und US 2004/0021687 A1 betreffen eine graphische Darstellung von Messdaten von Windenergieanlagen auf einer Landkarte.

Es ist daher Aufgabe der vorliegenden Erfindung, die ohnehin in Windenergieanlagen oder Zentralen einer Leitzentrale für mehrere Windenergieanlagen abgespeicherten Sensorwerte verbessert verwerten zu können.

Hierbei ist es Aufgabe der Erfindung, die Sensordaten so aufzubereiten, dass diese mehr als nur Kenntnisse aktueller oder vergangener Betriebszustände einzelnen Windenergieanlagen liefern.

Das Deutsche Patent- und Markenamt hat in der Prioritätsanmeldung zu vorliegender Anmeldung den folgenden Stand der Technik recherchiert: EP 1 340 303 B1 und WO 2009/ 046 095 A1.

Daher werden eine Vorrichtung und ein Verfahren zum grafischen Darstellen von Sensordaten mehrerer Windenergieanlagen vorgeschlagen.

Das Verfahren umfasst dabei die Schritte des Empfangens von Sensordaten, die Sensorwerte enthalten, mit einer Datenschnittstelle, wobei mit der Datenschnittstelle mehrere Windenergieanlagen und/oder Windparks verbunden sind.

Ferner umfasst das Verfahren den Schritt des Speicherns der empfangenen Sensordaten der Windenergieanlagen und/oder Windparks mit einem Speicher. Zudem umfasst das Verfahren das Auswählen mindestens eines aktuellen oder eines in der Vergangenheit liegenden Zeitpunkts mit Eingabemitteln, die mit einer Eingabeschnittstelle verbunden sind und Eingabesignale an die Eingabeschnittstelle liefern. Daneben umfasst das Verfahren das Ausgeben von Anzeigesignalen mit einer Anzeigeschnittstelle zur Anzeige von geografischen Karten und Sensorwerten mit einer Anzeige.

Außerdem werden mehrere oder alle Sensordaten für den ausgewählten Zeitpunkt aus dem Speicher mit Datenverarbeitungsmitteln abgerufen und mit der Anzeigeschnittstelle derart als Anzeigesignale ausgegeben, um die abgerufenen Sensorsignale mit einer Karte jeweils im Wesentlichen an der Position in der Karte mit einer Anzeige darzustellen, die der geografischen Position der Windenergieanlage entspricht, von der die jeweiligen Sensordaten empfangen wurden. Die Anzeigesignale werden also mit der Anzeigeschnittstelle ausgegeben und hierzu zuvor von den Datenverarbeitungsmitteln erzeugt.

Demnach werden also die Sensordaten oder Sensorwerte der Windenergieanlagen oder Windparks, die über eine Datenschnittstelle einer Vorrichtung zugeführt werden, in einem Speicher der Vorrichtung abgespeichert. Mit den Eingabemitteln wird dann, beispielsweise von einem Benutzer, ein Zeitpunkt ausgewählt und an einer Anzeige mittels über die Anzeigeschnittstelle ausgegebenen Anzeigesignalen geografische Karten und Sensorwerte der Sensorsignale, insbesondere als Symbole, angezeigt.

Die Anzeigesignale werden mit der Vorrichtung demnach derart erzeugt, um mit einer Anzeige mehrere oder alle Sensordaten für den mit den Eingabemitteln ausgewählten Zeitpunkt darzustellen. Hierbei werden diese Sensorsignale mit einer Karte jeweils in der Karte an der Position dargestellt, die im Wesentlichen der geografischen Position, also der realen Position, der Windenergieanlage entspricht, von der die Sensordaten empfangen wurden.

Ist demnach eine Anzeige mit der Anzeigeschnittstelle verbunden, so wird auf der Anzeige eine Karte dargestellt, und innerhalb der Karte werden die Sensordaten, z.B. deren enthaltenen Sensorwerte, des ausgewählten Zeitpunkts jeweils an der Position dargestellt, an der auch die Windenergieanlage tatsächlich positioniert ist.

Beispielsweise ist eine Windenergieanlage am nördlichsten Punkt einer Region, z.B. am nördlichsten Punkt Deutschlands, positioniert und sendet Sensorwerte in Form von Sensorsignalen an die Vorrichtung. Diese Sensorsignale, die auch Sensordaten genannt werden können, werden in der Vorrichtung, nämlich in einem Speicher der Vorrichtung, fortlaufend abgespeichert. Diese Sensordaten umfassen zum Beispiel Werte der Windgeschwindigkeit, die im Bereich der Windenergieanlage von einem Anemometer gemessen werden.

Nun wird - gemäß dem Beispiel - mit den Eingabemitteln ein Zeitpunkt ausgewählt, etwa der 1. Dezember 2014, 12:00 Uhr, und es werden aus dem Speicher die Sensordaten, für die Windgeschwindigkeit zu diesem ausgewählten Zeitpunkt geladen und in einer Anzeige, die mit der Anzeigeschnittstelle verbunden ist, auf einer Deutschlandkarte am nördlichsten Punkt der als Karte dargestellten Region dargestellt.

Im Falle, dass nun eine Vielzahl von Windenergieanlagen Sensordaten liefern, werden die Sensordaten für den ausgewählten Zeitpunkt an den unterschiedlichen Positionen der Deutschlandkarte dargestellt, die jeweils den Positionen entsprechen, an denen die Windenergieanlagen, von denen die Sensordaten jeweils empfangen wurden, positioniert sind.

Verschiedene Zeitpunkte und verschiedene Sensordaten sind somit auf der Übersicht gemeinschaftlich darstellbar, sodass auf sehr übersichtliche Weise eine schnelle überblickshafte Windgeschwindigkeitsverteilung über eine größere Region, wie zum Beispiel Deutschlandweit, dargestellt werden kann. Besonders Vorteilhaft ist, dass diese Sensordaten oder Sensorwerte zu einem beliebigen Zeitpunkt dargestellt werden können.

Demnach sind beispielsweise qualitative Aussagen über geeignete Standorte oder Regionen für Windenergieanlagen verifizierbar. Insbesondere können auch lokale Wetterphänomene detektiert werden, indem Regionen, in denen die Sensorwerte von Werten anderer umliegender Regionen stark abweichen, optisch einfach detektiert werden können. Durch Auswahl verschiedener interessierender Zeitpunkte kann auch ein Entstehungszeitpunkt eines Wetterphänomens detektiert werden.

Gemäß einer Ausführungsform wird mit den Eingabemitteln ferner nicht nur ein Zeitpunkt sondern ein Zeitraum, der also mehrere aufeinanderfolgende Zeitpunkte aufweist, ausgewählt. Ein Zeitraum umfasst hierbei Beispielsweise einen Startzeitpunkt und einen Endzeitpunkt.

Ferner wird eine Zeitschrittweite, zum Beispiel 10 Minuten, 1 Stunde, 24 Stunden, 1 Woche, 1 Monat oder 1 Jahr ausgewählt. Wird keine Zeitschrittweite vorgegeben, so wird automatisch durch die Vorrichtung eine Standard-Zeitschrittweite vorgegeben, die aber abänderbar ist. Ferner wird mit der Anzeigeschnittstelle ein Anzeigesignal ausgegeben, das dient, um mit einer Anzeige nacheinander schrittweise die Sensordaten für den ausgewählten Zeitraum mit der Karte darzustellen, wobei die Dauer zwischen den Schritten der ausgewählten Zeitschrittweite entspricht.

Demnach werden also durch Auswählen des Zeitraums und der Zeitschrittweite Schrittweise nach Art eines Zeitraffers für den Zeitraum die Sensordaten dargestellt. Ein über einen Bereich oder eine Region auf einer Karte ziehendes Windgebiet kann zum Beispiel durch diese Zeitrafferdarstellung verfolgt werden. Eine Sturmfront kann somit zum Beispiel nach Auftreffen aus einer beliebigen Richtung auf eine Region weiterverfolgt und die Verteilung in der Region beobachtet werden.

Ferner können bei verschiedenen Windrichtungen oder Szenarien Verschattungseffekte durch einzelne Windenergieanlagen in einem Windpark, die bei anderen Windenergieanlagen auftreten, für verschiedene Windsituationen nachvollzogen werden. Dies dient zum Beispiel, um bei der Planung oder Realisierung weiterer Windparks zuvor nachvollzogene negative Effekte vermindern oder verhindern zu können.

Gemäß einer weiteren Ausführungsform wird mit den Eingabemitteln eine Wiederholfunktion ausgewählt und die Sensordaten für den ausgewählten Zeitraum wiederholt, also in einer Schleife, jeweils mit der ausgewählten Zeitschrittweite schrittweise dargestellt.

Eine Auswertung einer Vielzahl von Sensordaten mit der Anzeige durch einen Benutzer wird damit vereinfacht, da dieser die Änderungen der Sensordaten im ausgewählten Zeitraum immer wieder verfolgen kann und somit ohne erneute Interaktion verschiedene Bereiche der dargestellten Region oder Karte optisch in jedem Durchlauf auswerten kann.

Gemäß einer weiteren Ausführungsform werden im Falle, dass mit den Eingabemitteln als Endzeitpunkt des Zeitraums der aktuelle Zeitpunkt oder gar kein Zeitpunkt ausgewählt wird und eine schrittweise Anzeige der Sensordaten gewünscht wird, am Darstellungsende des ausgewählten Zeitraums mit der Anzeigeschnittstelle die aktuellen Sensordaten ausgegeben.

Demnach werden automatisch nach dem letzten Schritt der schrittweisen Darstellung vergangener Sensorwerte, also am Darstellungsende, automatisch die aktuellen Sensorwerte dargestellt, sodass sofort wieder ein aktueller Überblick über die aktuellen Sensordaten ermöglicht wird. Hierbei sind aktuelle Sensordaten beispielsweise die zum aktuellen Zeitpunkt zuletzt von einer Windenergieanlage empfangenen Sensordaten.

Gemäß einer Ausführungsform wird mit den Eingabemitteln der darzustellende Ausschnitt der Karte variiert. Demnach ist zum Beispiel in einem ersten Überblick, beispielsweise während die genannte Wiederholfunktion ausgeführt wird, ein ganzes Land, wie zum Beispiel Deutschland, mit den Sensordaten in einer Zeitrafferdarstellung darstellbar, wobei besonders interessierende Bereiche der Karte durch Eingabe von Eingabesignalen über die Eingabeschnittstelle vergrößert werden können.

Gemäß einer weiteren Ausführungsform werden mit einer Schnittstelle Wetterprognosedaten, zum Beispiel die prognostizierte Windrichtung und Windstärke für verschiedene Regionen, von einer Wetterprognosestation oder Quelle für Wetterprognosedaten empfangen und mit den Eingabemitteln zukünftige Zeitpunkte oder Zeiträume ausgewählt.

Mittels der Datenverarbeitungsmittel der Vorrichtung erfolgt dann, basierend auf der Prognose sowie den zuvor gespeicherten Sensordaten, eine Prognose zukünftiger Sensordaten des ausgewählten Zeitpunkts oder Zeitraums, wobei diese zukünftigen prognostizierten Sensordaten für den in der Zukunft liegenden ausgewählten Zeitpunkt oder Zeitraum dann auf der Karte dargestellt werden.

Somit ist beispielsweise für in der Zukunft liegende Zeitpunkte oder Zeiträume eine überblickshafte Auslastung verschiedener Windenergieanlagen sowie eine im Zusammenhang damit stehende Auslastung des Netzes darstellbar.

Die mit der Anzeigeschnittstelle ausgegebenen Signale werden von dem Datenverarbeitungsmittel ferner so angepasst, dass eine mit der Anzeigeschnittstelle verbundene Anzeige unterschiedliche Farben verwendet, um kenntlich zu machen, ob die dargestellten Sensordaten solche sind, die vor einem aktuellen Zeitpunkt liegen, die nach einem aktuellen Zeitpunkt liegen oder die in einem aktuellen Zeitpunkt liegen.

Es ist somit auf schnelle Art und Weise optisch wahrnehmbar, ob es sich bei den dargestellten Sensordaten um historische Sensordaten, prognostizierte Sensordaten oder um aktuell aufgenommene Sensordaten handelt.

Gemäß einer weiteren Ausführungsform werden mit den Datenverarbeitungsmitteln weitere Werte oder Informationen aus den Sensordaten, insbesondere Mittelwerte der Leistung, Windgeschwindigkeiten und/oder die im Kartenausschnitt verteilte Leistung für den Zeitpunkt der Sensorwerte ermittelt. Die weiteren Werte sind somit ebenfalls einem Zeitpunkt zugeordnet. Ferner werden die weiteren Werte über die Anzeigeschnittstelle an die Anzeige ausgegeben, um neben den Sensorwerten auch die weiteren Werte des ausgewählten Zeitpunkts oder Zeitraums mit der Anzeige anzuzeigen.

Ferner betrifft die Erfindung eine Vorrichtung zum grafischen Darstellen von Sensordaten mehrerer Windenergieanlagen und insbesondere zur Ausführung eines Verfahrens nach einer der zuvor genannten Ausführungsformen des Verfahrens.

Die Vorrichtung umfasst eine Datenschnittstelle zum Verbinden mit mehreren Windenergieanlagen und/oder Windparks mittels einer Datenverbindung, um Sensordaten der verbundenen Windenergieanlagen und/oder Windparks zu empfangen. Ferner umfasst die Vorrichtung einen Speicher zum Speichern der empfangenen Sensordaten der Windenergieanlagen und/oder Windparks sowie eine Anzeigeschnittstelle zum Ausgeben von Anzeigesignalen für eine Anzeige zum Anzeigen geografischer Karten und von Sensorwerten.

Außerdem umfasst die Vorrichtung eine Eingabeschnittstelle zum Anschließen von Eingabemitteln, die zum Auswählen mindestens eines aktuellen oder eines in der Vergangenheit liegenden Zeitpunkts dienen. Zudem sind Datenverarbeitungsmittel vorgesehen, die eingerichtet sind, mehrere oder alle Sensordaten für den ausgewählten Zeitpunkt aus dem Speicher abzurufen und mit der Anzeigeschnittstelle Anzeigesignale auszugeben, um eine Anzeige so anzusteuern, dass die abgerufenen Sensorsignale mit einer Karte jeweils im Wesentlichen an der Position in der Karte mit einer Anzeige darstellbar sind, an der die Windenergieanlage, von der die jeweiligen Sensordaten empfangen wurden, positioniert ist.

Demnach umfasst die Vorrichtung die Datenschnittstelle, den Speicher, die Anzeigeschnittstelle, die Eingabeschnittstelle und die Datenverarbeitungsmittel. Die Eingabeschnittstelle dient zum Verbinden eines Eingabemittels, das an einem entfernten Ort angeordnet sein kann. Die Verbindung zwischen der Eingabeschnittstelle und dem Eingabemittel kann beispielsweise mittels einer Internetverbindung erfolgen.

Ferner kann auch eine Anzeige an einem entfernten Ort angeordnet und über einer Datenverbindung mit der Anzeigeschnittstelle verbunden sein, sodass auch eine Datenverbindung zwischen der Anzeigeschnittstelle und der Anzeige mittels einer Datenverbindung, wie zum Beispiel dem Internet, erfolgen kann. Alternativ ist es jedoch auch möglich, dass die Anzeige und ein Eingabemittel mit der Vorrichtung zusammen am gleichen Ort, also zentral, angeordnet sind.

Demnach ist also auch ein Fernzugriff auf die Vorrichtung über das Internet oder anderes Datennetzwerk möglich. Die Vorrichtung kann dazu z.B. Bestandteil einer Leitwarte oder Leitzentrale sein.

Gemäß einer Ausführungsform sind mittels der Eingabeschnittstelle, insbesondere mit daran angeschlossenen Eingabemitteln, ein Zeitraum und/oder eine Zeitschrittweite auswählbar, um mit der Anzeigeschnittstelle Ansteuersignale zur Ansteuerung einer Anzeige auszugeben. Die Ansteuersignale sind gemäß dieser Ausführungsform derart eingerichtet, um mit der Anzeige nacheinander schrittweise die Sensordaten für den ausgewählten Zeitraum mit der Karte darzustellen, wobei die Dauer zwischen zwei Schritten der Darstellung der ausgewählten Zeitschrittweite entspricht.

Eine Zeitrafferdarstellung der Veränderung der Sensordaten ist somit für einen ausgewählten Zeitraum möglich. Die Zeitschrittweite ist gemäß einer weiteren Ausführungsform auf einen vordefinierten Wert festgelegt, der jedoch mit der Eingabeschnittstelle, insbesondere mittels Eingabemitteln, abgeändert werden kann.

Gemäß einer weiteren Ausführungsform ist mit der Eingabeschnittstelle, insbesondere mittels Eingabemitteln, eine Wiederholfunktion auswählbar, um die Sensordaten für den ausgewählten Zeitraum wiederholt in einer Schleife darzustellen. Durch die Darstellung in einer Schleife wird die optische Auswertbarkeit eines Benutzers vereinfacht.

Gemäß einer weiteren Ausführungsform werden im Falle, dass mit der Eingabeschnittstelle, insbesondere mittels Eingabemitteln, als Endzeitpunkt des Zeitraums der aktuelle Zeitpunkt oder kein Zeitpunkt ausgewählt wird, am Ende der Ausgabe von Anzeigesignalen zur Darstellung des Zeitraums automatisch die aktuellen Sensordaten in der Karte dargestellt.

Gemäß einer weiteren Ausführungsform ist die Eingabeschnittstelle eingerichtet, insbesondere mittels Eingabemitteln, einen mit der Anzeige darstellbaren Ausschnitt der Karte zu variieren, also zu vergrößern, zu verkleinern oder zu die Region oder den Bereich zu wechseln.

Gemäß einer weiteren Ausführungsform umfasst die Vorrichtung eine Schnittstelle zum Verbinden mit einer Quelle für Wetterprognosedaten, insbesondere für die Windrichtung und Windstärke, und zum Empfangen der Wetterprognosedaten, wobei mit der Eingabeschnittstelle, insbesondere mittels Eingabemitteln, auch zukünftige Zeitpunkte oder Zeiträume auswählbar sind und die Datenverarbeitungsmittel eingerichtet sind, basierend auf den Wetterprognosedaten sowie auf gespeicherten Werten der Sensordaten zukünftige Sensordaten zu prognostizieren und Anzeigesignale mit der Anzeigeschnittstelle auszugeben, um die prognostizierten Sensordaten mit der Karte auf einer Anzeige darzustellen.

Gemäß einer weiteren Ausführungsform sind die Datenverarbeitungsmittel eingerichtet, mit der Anzeige optisch, zum Beispiel durch unterschiedliche Farben, kenntlich zu machen, ob die dargestellten Sensordaten solche sind, die vor einem aktuellen Zeitpunkt liegen, die nach einem aktuellen Zeitpunkt liegen oder die in einem aktuellen Zeitpunkt liegen.

Gemäß einer weiteren Ausführungsform der Datenverarbeitungsmittel sind diese eingerichtet, weitere Werte, insbesondere Mittelwerte der Leistung, Windgeschwindigkeit und/oder der im Kartenausschnitt verteilten Leistung aus mehreren Sensorwerten des ausgewählten Zeitpunkts, zu ermitteln, um mit der Anzeigeschnittstelle Anzeigesingle zur Ansteuerung einer Anzeige auszugeben, um die weiteren Werte mit der Anzeige zusammen mit den Sensordaten für den gleichen Zeitpunkt auszugeben.

Ferner umfasst die Erfindung ein System mit mehreren Windenergieanlagen und/oder Windparks und einer Vorrichtung gemäß einer der vorgenannten Ausführungsformen, insbesondere zur Ausführung einer der vorgenannten Ausführungsformen des Verfahrens.

Weitere Ausführungsformen ergeben sich anhand der in den Zeichnungen näher erläuterten Ausführungsbeispiele. In den Zeichnungen zeigen:
- Fig. 1: eine Windenergieanlage,
- Fig. 2: einen Windpark,
- Fig. 3: eine erfindungsgemäße Vorrichtung und
- Fig. 4: eine Karte mit Sensordaten.

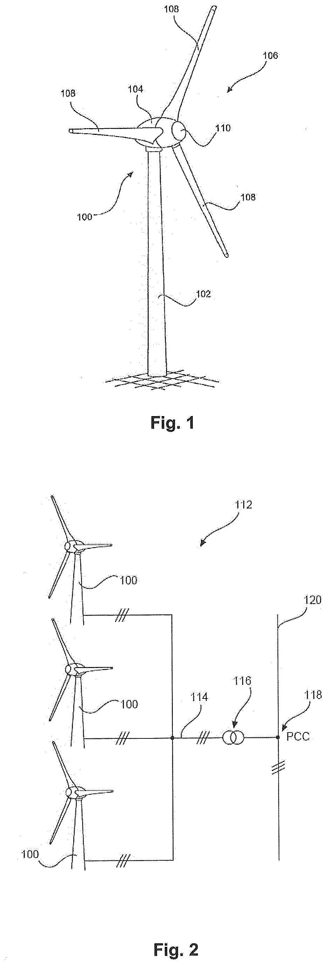

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen.

Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112.

Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen.

Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

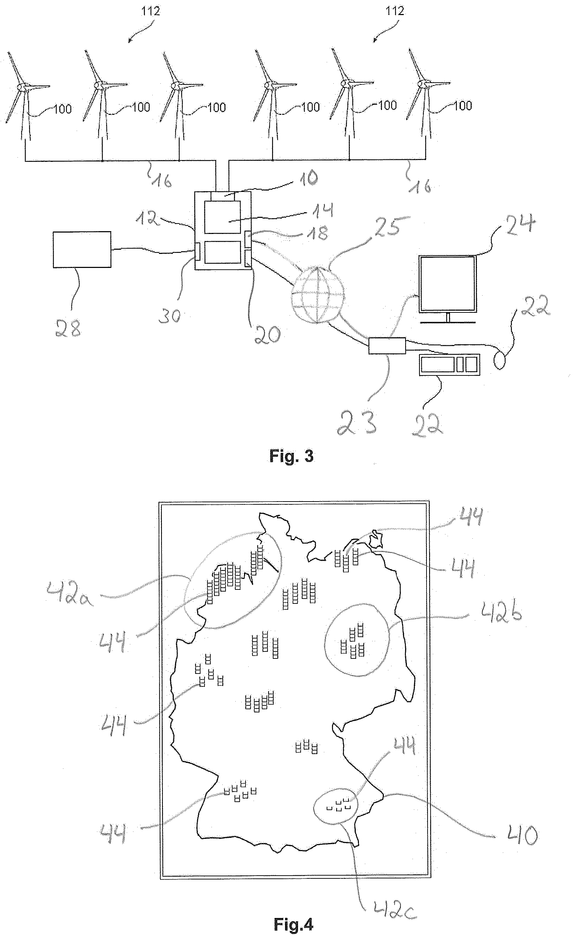

Fig. 3 zeigt zwei Windparks 112, vertretend für eine Vielzahl von Windparks 112, die über eine Datenschnittstelle 10 mit einer Vorrichtung 12 verbunden sind. Die Vorrichtung 12 weist einen Speicher 14 auf, um Sensordaten 16, die über die Datenschnittstelle 10 empfangen werden, abzuspeichern. Ferner umfasst die Vorrichtung eine Anzeigeschnittstelle 18 sowie eine Eingabeschnittstelle 20. Die Eingabeschnittstelle 20 dient zum direkten oder indirekten Anschluss von Eingabegeräten 22. Die Eingabegeräte 22 entsprechen hier einer Computermaus und einer Tastatur. Vorliegend sind die Eingabegeräte 22 indirekt über einen Rechner 23 mit der Eingabeschnittstelle 20 verbunden.

Ferner ist eine Anzeige 24 dargestellt, die mit der Anzeigeschnittstelle 18 direkt oder indirekt verbunden ist. Vorliegend ist auch die Anzeige 24 indirekt über den Rechner 23 mit der Anzeigeschnittstelle 18 verbunden. Die Verbindungen zwischen der Anzeige 24 und der Anzeigeschnittstelle 18 sowie dem Eingabemittel 22 und der Eingabeschnittstelle 20 mit dem Rechner 23 können zum Beispiel über eine Internetverbindung 25 erfolgen, sodass eine Fernabfrage der Vorrichtung 12 mit einer an einem entfernten Ort positionierten Anzeige 24 und Eingabegeräten 22 realisierbar ist.

Mit dem Eingabegerät 22 lassen sich Zeitpunkte und Zeiträume auswählen, für die die Sensordaten 16, also insbesondere deren Sensorwerte oder Werte, zusammen mit einer Karte auf der Anzeige 24 dargestellt werden. Die Vorrichtung weist hierzu Datenverarbeitungsmittel 26 auf, die entsprechend der Eingabe mit dem Eingabegerät 22 abgespeicherte Sensordaten 16 aus dem Speicher 14 laden und zusammen mit der Karte über die Anzeigeschnittstelle 18 als Anzeigesignale ausgeben.

Die Anzeigesignale werden von dem Datenverarbeitungsmittel 26 so erzeugt, dass die Anzeige 24 so angesteuert wird, dass die Sensordaten der ausgewählten Zeitpunkte oder Zeiträume in der Karte auf der Anzeige 24 dargestellt werden.

Ferner ist die Vorrichtung 12 mit einer Wetterprognosestation 28 über eine Schnittstelle 30 der Vorrichtung 12 verbunden. Die Wetterprognosestation 28 liefert prognostizierte Wetterdaten über die Schnittstelle, sodass auch, basierend auf den Sensordaten 16 und den von der Wetterprognosestation 28 empfangenen Wetterdaten prognostizierte Sensordaten für zukünftige Zeitpunkte oder Zeiträume von dem Datenverarbeitungsmittel 26 prognostiziert und mit der Anzeige 24 zusammen auf einer Karte dargestellt werden können.

Fig. 4 zeigt einen Ausschnitt einer mit der Anzeige 24 dargestellten Karte 40 gemäß einem Ausführungsbeispiel. Die Karte 40 ist hier eine Deutschlandkarte, wobei in verschiedenen Bereichen oder Regionen 42a, 42b, 42c Sensordaten von Windenergieanlagen 100 dargestellt werden.

Die Karte ist hier für einen mit den Eingabemitteln 20 eingegebenen Zeitpunkt dargestellt. Die einzelnen in den Bereichen 42a bis 42c dargestellten Säulen oder Symbole 44 symbolisieren die im ausgewählten Zeitpunkt dargestellten Windgeschwindigkeitsmesswerte der Sensordaten 16. Je höher die Säule 44 ist, desto höher ist die Windgeschwindigkeit an diesem Standort im ausgewählten und hier dargestellten Zeitpunkt.

Beispielsweise sind die Säulen im Bereich 42a, die im Bereich der Nordseeküstenregion liegen, höher als die Säulen 42c, die im südöstlichen Alpenbereich positioniert sind. Andere Säulen 44 weisen andere Werte auf.

Jede Säule steht für eine oder mehrere Windenergieanlage, die tatsächlich im Wesentlichen in der Position angeordnet ist oder sind, wie sie auf der Anzeige 24 in der Karte 40 dargestellt ist.

Im vorliegenden Ausführungsbeispiel sind nur einige der tatsächlich vorhandenen und mit der Vorrichtung 12 verbundenen Windenergieanlagen 100 in der Anzeige 24 durch Auswahl mit den Eingabemitteln 20 dargestellt. Hier sind beispielsweise nur für bestimmte Regionen repräsentative Windenergieanlagen bzw. deren Sensordaten ausgewählt, um in einer Zeitrafferfunktion, nämlich in einer schrittweisen Darstellung eines vergangenen Zeitraums, die Veränderung der gemessenen Windgeschwindigkeit aufzuzeigen.

Dank der Darstellung der Karte 40 mit den Sensordaten in Form von Säulen 44 oder in Form anderer Symbole ist ein schneller optischer Überblick über den Verlauf zum Beispiel einer Windfront, die an einer Seite auf ein Land oder eine Region trifft und sich dann im Landesinneren verteilt, von einem Benutzer erhaltbar. Der Benutzer kann hieraus weitere Schlussfolgerungen, zum Beispiel für die Auswirkungen zukünftige Wetterphänomene, ziehen.

## Patentansprüche

1. Verfahren zum grafischen Darstellen von Sensordaten (16) mehrerer Windenergieanlagen (100), umfassend die Schritte:
- Empfangen von Sensordaten (16) mit einer Datenschnittstelle (10) einer Vorrichtung (12) von mit der Datenschnittstelle (10) verbundenen Windenergieanlagen (100) und/oder Windparks (112),
- Speichern der empfangenen Sensordaten (16) der Windenergieanlagen (100) und/oder Windparks (112) mit einem Speicher (14),
- Auswählen mindestens eines in der Vergangenheit liegenden Zeitpunkts mit über eine Eingabeschnittstelle (20) angeschlossenen Eingabemitteln (22),
- Ausgeben von Anzeigesignalen mit einer Anzeigeschnittstelle (18) zur Darstellung geografischer Karten (40) und Sensorwerten (16) mit einer Anzeige (24) und,
- Abrufen mehrerer oder aller Sensordaten (16) mit einem Datenverarbeitungsmittel (26) für den ausgewählten Zeitpunkt aus dem Speicher (14) und Ausgeben von derartigen Anzeigesignalen mit der Anzeigeschnittstelle (18), um die abgerufenen Sensorsignale mit einer Karte (40) jeweils im Wesentlichen an der Position in der Karte (40) mit der Anzeige (24) darzustellen, die im Wesentlichen der geografischen Position der Windenergieanlage (100) entspricht, von der die jeweiligen Sensordaten (16) empfangen wurden.

2. Verfahren nach Anspruch 1, wobei mit den Eingabemitteln (22) ein Zeitraum und/oder eine Zeitschrittweite auswählbar ist, und mit der Anzeigeschnittstelle (18) derartige Anzeigesignale ausgegeben werden, um mit der Anzeige (24) nacheinander schrittweise die Sensordaten für den ausgewählten Zeitraum in der Karte (40) darzustellen, wobei die Dauer zwischen zwei Schritten der Darstellung der ausgewählten Zeitschrittweite entspricht.

3. Verfahren nach Anspruch 2, wobei mit den Eingabemitteln (22) eine Wiederholfunktion ausgewählt wird und mit der Anzeigeschnittstelle (18) derartige Anzeigesignale ausgegeben werden, um mit der Anzeige (24) die Sensordaten für den ausgewählten Zeitraum wiederholt schrittweise darzustellen.

4. Verfahren nach Anspruch 2 oder 3, wobei im Falle, dass mit den Eingabemitteln (22) als Endzeitpunkt des Zeitraums ein aktueller Zeitpunkt oder kein Zeitpunkt ausgewählt wird, automatisch aktuelle Sensordaten zur Anzeige in der Karte (40) mit der Anzeigeschnittstelle (18) ausgegeben werden, wenn ein Darstellungsende des ausgewählten Zeitraums erreicht ist.

5. Verfahren nach einem der vorhergehenden Ansprüche, wobei mit den Eingabemitteln (22) ein mit der Anzeige (24) darzustellender Ausschnitt einer Karte variierbar ist.

6. Verfahren nach einem der vorhergehenden Ansprüche, wobei mittels einer Schnittstelle (30) zum Verbinden mit einer Quelle für Wetterprognosedaten (28), insbesondere für die Windrichtung und Windstärke, Wetterprognosedaten empfangen, mit den Eingabemitteln (22) zukünftige Zeitpunkte oder Zeiträume ausgewählt, basierend auf den Wetterprognosedaten sowie auf gespeicherten Sensordaten zukünftige Sensordaten für den ausgewählten Zeitpunkt oder Zeitraum prognostiziert und als Anzeigesignale über die Anzeigeschnittstelle (18) mit einer Karte zur Darstellung auf einer Anzeige (24) ausgegeben werden.

7. Verfahren nach einem der vorhergehenden Ansprüche, wobei derartige Anzeigesignale mit der Anzeigeschnittstelle (18) ausgegeben werden, um Sensordaten, die vor einem aktuellen Zeitpunkt liegen, die nach einem aktuellen Zeitpunkt liegen oder die in einen aktuellen Zeitpunkt liegen, unterschiedliche Farben bei der Darstellung auf der Anzeige zuzuordnen.

8. Verfahren nach einem der vorhergehenden Ansprüche, wobei mittels der Datenverarbeitungsmittel (26) weitere Werte, insbesondere Mittelwerte der Leistung, Windgeschwindigkeiten und/oder der im Kartenausschnitt verteilten Leistung, aus mehreren Sensorwerten des ausgewählten Zeitpunkts oder Zeitraums ermittelt werden und die weiteren Werte zusammen mit den Sensorwerten desselben Zeitpunkts mit der Anzeigeschnittstelle (18) ausgegeben werden, um zusammen mit den Sensordaten auf der Anzeige (24) angezeigt zu werden.

9. Vorrichtung zum grafischen Darstellen von Sensordaten (16) mehrerer Windenergieanlagen (100), insbesondere zur Ausführung des Verfahrens nach einem der Ansprüche 1 bis 8, umfassend:
- eine Datenschnittstelle (10) zum Verbinden mit mehreren Windenergieanlagen (100) und/oder Windparks (112) mittels einer Datenverbindung, um Sensordaten (16) der verbundenen Windenergieanlagen (100) und/oder Windparks (112) zu empfangen,
- einen Speicher (14) zum Speichern der empfangenen Sensordaten (16) der Windenergieanlagen (100) und/oder Windparks (112),
- eine Anzeigeschnittstelle (18) zum Ausgeben von Anzeigesignalen zur Darstellung geografischer Karten und Sensorwerten mit einer Anzeige (24),
- eine Eingabeschnittstelle (20) zum Empfangen von Eingabesignalen von Eingabemittel (22) zum Auswählen mindestens eines in der Vergangenheit liegenden Zeitpunkts und
- Datenverarbeitungsmittel (26), die eingerichtet sind, mehrere oder alle Sensordaten für den ausgewählten Zeitpunkt aus dem Speicher (14) abzurufen und mit der Anzeigeschnittstelle (18) derartige Anzeigesignale auszugeben, um die abgerufenen Sensorsignale mit einer Karte jeweils im Wesentlichen an der Position in der Karte (40) mit einer Anzeige (24) darzustellen, die im Wesentlichen der geografischen Position der Windenergieanlage (100) entspricht, von der die jeweiligen Sensordaten empfangen wurden.

10. Vorrichtung nach Anspruch 9, wobei mittels der Eingabeschnittstelle (20) ein Zeitraum und/oder eine Zeitschrittweite auswählbar ist und mit der Anzeigeschnittstelle (18) derartige Anzeigesignale ausgebbar sind, um mit der Anzeige (24) nacheinander schrittweise die Sensordaten für den ausgewählten Zeitraum mit der Karte (40) darzustellen, wobei die Dauer zwischen zwei Schritten der Darstellung der ausgewählten Zeitschrittweite entspricht.

11. Vorrichtung nach Anspruch 9 oder 10, wobei mittels der Eingabeschnittstelle (20) eine Wiederholfunktion zum wiederholten Darstellen der Sensordaten für den ausgewählten Zeitraum auswählbar ist und/oder mittels der Eingabeschnittstelle (20) ein mit der Anzeige darzustellender Ausschnitt einer Karte, angesteuert durch die Anzeigesignale der Anzeigeschnittstelle (18), variierbar ist.

12. Vorrichtung nach einem der Ansprüche 9 bis 11, wobei die Vorrichtung eine Schnittstelle zum Verbinden mit einer Quelle für Wetterprognosedaten, insbesondere für die Windrichtung und Windstärke, und zum Empfangen der Wetterprognosedaten umfasst und mittels der Eingabeschnittstell (20) zukünftige Zeitpunkte oder Zeiträume auswählbar sind und die Datenverarbeitungsmittel (26) eingerichtet sind, basierend auf der Wetterprognosedaten sowie auf gespeicherten Sensordaten zukünftige Sensordaten für den ausgewählten Zeitpunkt oder Zeitraum zu prognostizieren und als Anzeigesignale über die Anzeigeschnittstelle (18) mit einer Karte zur Darstellung auf einer Anzeige (24) auszugeben.

13. Vorrichtung nach einem der Ansprüche 9 bis 12, wobei die Datenverarbeitungsmittel eingerichtet sind, mit der Anzeigeschnittstelle (18) derartige Anzeigesignale auszugeben, um die Anzeige (24) so anzusteuern, dass auf der Anzeige (24) durch unterschiedliche Farben, kenntlich gemacht wird, ob die dargestellten Sensordaten (16) Sensordaten sind, die vor einem aktuellen Zeitpunkt liegen, die nach einem aktuellen Zeitpunkt liegen oder die in einem aktuellen Zeitpunkt liegen.

14. Vorrichtung nach einem der Ansprüche 9 bis 13, wobei die Datenverarbeitungsmittel (26) eingerichtet sind, weitere Werte, insbesondere Mittelwerte der Leistung, Windgeschwindigkeiten und/oder der im Kartenausschnitt verteilten Leistung, aus mehreren Sensorwerten des ausgewählten Zeitpunkts zu ermitteln und um die weiteren Werte mit der Anzeigeschnittstelle (18) zusammen mit den Signalen für die Sensordaten des ausgewählten Zeitpunkts oder Zeitraums zur Darstellung auf der Anzeige (24) auszugeben.

15. System mit mehreren Windenergieanlagen (100) und/oder Windparks (112) und einer Vorrichtung (12) nach einem der Ansprüche 9 bis 14, wobei die Vorrichtung (12) mittels einer Datenschnittstelle (10) mit den Windenergieanlagen (100) über eine Datenverbindung verbunden ist.

## Claims

1. A method for graphically presenting sensor data (16) from a plurality of wind power installations (100), comprising the steps of:
- using a data interface (10) of an apparatus (12) to receive sensor data (16) from wind power installations (100) and/or wind farms (112) connected to the data interface (10),
- using a memory (14) to store the received sensor data (16) from the wind power installations (100) and/or wind farms (112),
- using input means (22), which are connected via an input interface (20), to select at least one time in the past,
- using a display interface (18) to output displays signals for the purpose of presenting geographical maps (40) and sensor values (16) using a display (24), and
- using a data processing means (26) to retrieve a plurality of sensor data or all sensor data (16) for the selected time from the memory (14) and using the display interface (18) to output such display signals in order to use the display (24) to present the retrieved sensor signals with a map (40) in each case substantially at that position in the map (40) which corresponds substantially to the geographical position of the wind power installation (100) from which the respective sensor data (16) were received.

2. The method as claimed in claim 1, wherein the input means (22) can be used to select a period and/or a time increment, and the display interface (18) is used to output such display signals in order to use the display (24) to gradually present the sensor data in succession for the selected period in the map (40), wherein the duration between two presentation steps corresponds to the selected time increment.

3. The method as claimed in claim 2, wherein the input means (22) are used to select a repeat function, and the display interface (18) is used to output such display signals in order to use the display (24) to repeatedly gradually present the sensor data for the selected period.

4. The method as claimed in claim 2 or 3, wherein, if the input means (22) are used to select a current time or no time as the end time of the period, the display interface (18) is used to automatically output current sensor data for display in the map (40) if a presentation end of the selected period has been reached.

5. The method as claimed in one of the preceding claims, wherein the input means (22) can be used to vary a section of a map to be presented using the display (24).

6. The method as claimed in one of the preceding claims, wherein an interface (30) for connection to a source of weather forecast data (28), in particular the wind direction and wind strength, is used to receive weather forecast data, the input means (22) are used to select future times or periods, and future sensor data for the selected time or period are forecast on the basis of the weather forecast data and stored sensor data and are output as display signals, via the display interface (18), with a map for presentation on a display (24).

7. The method as claimed in one of the preceding claims, wherein the display interface (18) is used to output such display signals in order to assign different colors to sensor data which are before a current time, are after a current time or are at a current time during presentation on the display.

8. The method as claimed in one of the preceding claims, wherein the data processing means (26) are used to determine further values, in particular mean values of the power, wind speeds and/or the power distributed in the map section, from a plurality of sensor values of the selected time or period, and the display interface (18) is used to output the further values, together with the sensor values of the same time, in order to be displayed together with the sensor data on the display (24).

9. An apparatus for graphically presenting sensor data (16) from a plurality of wind power installations (100), in particular for carrying out the method as claimed in one of claims 1 to 8, comprising:
- a data interface (10) for connection to a plurality of wind power installations (100) and/or wind farms (112) by means of a data connection in order to receive sensor data (16) from the connected wind power installations (100) and/or wind farms (112),
- a memory (14) for storing the received sensor data (16) from the wind power installations (100) and/or wind farms (112),
- a display interface (18) for outputting display signals for presenting geographical maps and sensor values using a display (24),
- an input interface (20) for receiving input signals from input means (22) for selecting at least one time in the past, and
- data processing means (26) which are set up to retrieve a plurality of sensor data or all sensor data for the selected time from the memory (14) and to output such display signals using the display interface (18) in order to use a display (24) to present the retrieved sensor signals with a map in each case substantially at that position in the map (40) which substantially corresponds to the geographical position of the wind power installation (100) from which the respective sensor data were received.

10. The apparatus as claimed in claim 9, wherein the input interface (20) can be used to select a period and/or a time increment, and the display interface (18) can be used to output such display signals in order to use the display (24) to gradually present the sensor data in succession for the selected period with the map (40), wherein the duration between two presentation steps corresponds to the selected time increment.

11. The apparatus as claimed in claim 9 or 10, wherein the input interface (20) can be used to select a repeat function for repeatedly presenting the sensor data for the selected period, and/or the input interface (20) can be used to vary a section of a map to be presented using the display under the control of the display signals from the display interface (18).

12. The apparatus as claimed in one of claims 9 to 11, wherein the apparatus comprises an interface for connection to a source of weather forecast data, in particular the wind direction and wind strength, and for receiving the weather forecast data, and the input interface (20) can be used to select future times or periods, and the data processing means (26) are set up to forecast future sensor data for the selected time or period on the basis of the weather forecast data and stored sensor data and to output them as display signals, via the display interface (18), with a map for presentation on a display (24).

13. The apparatus as claimed in one of claims 9 to 12, wherein the data processing means are set up to use the display interface (18) to output such display signals in order to control the display (24) in such a manner that different colors are used on the display (24) to mark whether the presented sensor data (16) are sensor data which are before a current time, are after a current time or are at a current time.

14. The apparatus as claimed in one of claims 9 to 13, wherein the data processing means (26) are set up to determine further values, in particular mean values of the power, wind speeds and/or the power distributed in the map section, from a plurality of sensor values of the selected time and to use the display interface (18) to output the further values, together with the signals for the sensor data of the selected time or period, for presentation on the display (24).

15. A system having a plurality of wind power installations (100) and/or wind farms (112) and an apparatus (12) as claimed in one of claims 9 to 14, wherein the apparatus (12) is connected, by means of a data interface (10), to the wind power installations (100) via a data connection.

## Revendications

1. Procédé de représentation graphique de données de capteur (16) de plusieurs éoliennes (100), comprenant les étapes :
- de réception de données de capteur (16) avec une interface de données (10) d'un dispositif (12) en provenance d'éoliennes (100) et/ou de parcs éoliens (112) raccordés à l'interface de données (10),
- de stockage des données de capteur (16) reçues des éoliennes (100) et/ou parcs éoliens (112) avec une mémoire (14),
- de sélection d'au moins un moment passé avec des moyens d'entrée (22) connectés par l'intermédiaire d'une interface d'entrée (20),
- d'envoi de signaux d'affichage avec une interface d'affichage (18) pour représenter des cartes géographiques (40) et des valeurs de capteur (16) avec un affichage (24), et
- de prélèvement de la mémoire (14) de plusieurs ou de toutes les données de capteur (16) avec un moyen de traitement de données (26) pour le moment sélectionné et d'envoi de signaux d'affichage de ce type avec l'interface d'affichage (18) pour représenter avec l'affichage (24) les signaux de capteur prélevés avec une carte (40) respectivement sensiblement sur la position sur la carte (40), qui correspond sensiblement à la position géographique de l'éolienne (100), de laquelle les données de capteur (16) respectives ont été reçues.

2. Procédé selon la revendication 1, dans lequel un moment et/ou un incrément de temps peuvent être sélectionnés avec les moyens d'entrée (22), et des signaux d'affichage sont envoyés avec l'interface d'affichage (18) pour représenter avec l'affichage (24) les unes après les autres étape par étape les données de capteur pour le moment sélectionné sur la carte (40), dans lequel la durée entre deux étapes de la représentation correspond à l'incrément de temps sélectionné.

3. Procédé selon la revendication 2, dans lequel une fonction de répétition est sélectionnée avec les moyens d'entrée (22) et des signaux d'affichage de ce type sont envoyés avec l'interface d'affichage (18) pour représenter avec l'affichage (24) de manière répétée étape par étape les données de capteur pour le moment sélectionné.

4. Procédé selon la revendication 2 ou 3, dans lequel, si un moment actuel est sélectionné avec les moyens d'entrée (22) en tant que moment final du moment ou si aucun moment n'est sélectionné, des données de capteur actuelles sont automatiquement envoyées pour l'affichage sur la carte (40) avec l'interface d'affichage (18) quand une fin de représentation du moment sélectionné est atteinte.

5. Procédé selon l'une quelconque des revendications précédentes, dans lequel un extrait d'une carte à représenter avec l'affichage (24) peut varier avec les moyens d'entrée (22).

6. Procédé selon l'une quelconque des revendications précédentes, dans lequel des données de prévision météorologique sont reçues au moyen d'une interface (30) pour le raccordement à une source pour des données de prévision météorologique (28), en particulier pour le sens du vent et la force du vent, des moments ou périodes de temps futurs sont sélectionnés avec les moyens d'entrée (22), des données de capteur futures pour le moment sélectionné ou la période de temps sélectionnée sont prévues sur la base des données de prévision météorologique ainsi que sur la base de données de capteur stockées et sont envoyées en tant que signaux d'affichage par l'intermédiaire de l'interface d'affichage (18) avec une carte pour la représentation sur un affichage (24).

7. Procédé selon l'une quelconque des revendications précédentes, dans lequel des signaux d'affichage de ce type sont envoyés avec l'interface d'affichage (18) pour associer différentes couleurs lors de la représentation sur l'affichage à des données de capteur, qui se situent avant un moment actuel, qui se situent après un moment actuel ou qui se situent dans un moment actuel.

8. Procédé selon l'une quelconque des revendications précédentes, dans lequel d'autres valeurs, en particulier des valeurs moyennes de la puissance, des vitesses du vent et/ou de la puissance répartie dans l'extrait de carte sont déterminées au moyen du moyen de traitement de données (26) à partir de plusieurs valeurs de capteur du moment sélectionné ou de la période de temps sélectionnée, et les autres valeurs sont envoyées conjointement avec les valeurs de capteur du même moment avec l'interface d'affichage (18) pour être affichées sur l'affichage (24) conjointement avec les données de capteur.

9. Dispositif de représentation graphique de données de capteur (16) de plusieurs éoliennes (100), en particulier pour exécuter le procédé selon l'une quelconque des revendications 1 à 8, comprenant :
- une interface de données (10) destinée à être raccordée à plusieurs éoliennes (100) et/ou parcs éoliens (112) au moyen d'une connexion de données pour recevoir des données de capteur (16) des éoliennes (100) et/ou parcs éoliens (112) raccordés,
- une mémoire (14) pour stocker les données de capteur (16) reçues des éoliennes (100) et/ou parcs éoliens (112),
- une interface d'affichage (18) pour envoyer des signaux d'affichage pour représenter des cartes géographiques et des valeurs de capteur avec un affichage (24),
- une interface d'entrée (20) pour recevoir des signaux d'entrée de moyens d'entrée (22) pour sélectionner au moins un moment passé, et
- des moyens de traitement de données (26) qui sont mis au point pour prélever de la mémoire (14) plusieurs ou toutes les données de capteur pour le moment sélectionné et pour envoyer avec l'interface d'affichage (18) des signaux d'affichage de ce type pour représenter avec un affichage (24) les signaux de capteur prélevés avec une carte respectivement sensiblement sur la position sur la carte (40), qui correspond sensiblement à la position géographique de l'éolienne (100), de laquelle les données de capteur respectives ont été reçues.

10. Dispositif selon la revendication 9, dans lequel un moment et/ou un incrément de temps peuvent être sélectionnés au moyen de l'interface d'entrée (20) et des signaux d'affichage de ce type peuvent être envoyés avec l'interface d'affichage (18) pour représenter avec l'affichage (24) les données de capteur pour le moment sélectionné avec la carte (40) les unes après les autres étape par étape, dans lequel la durée entre deux étapes de la représentation correspond à l'incrément de temps sélectionné.

11. Dispositif selon la revendication 9 ou 10, dans lequel une fonction de répétition pour représenter de manière répétée les données de capteur pour le moment sélectionné peut être sélectionnée au moyen de l'interface d'entrée (20), et/ou un extrait d'une carte à représenter avec l'affichage peut varier, de manière pilotée par les signaux d'affichage de l'interface d'affichage (18), au moyen de l'interface d'entrée (20).

12. Dispositif selon l'une quelconque des revendications 9 à 11, dans lequel le dispositif comprend une interface destinée à être raccordée à une source pour des données de prévision météorologique, en particulier pour le sens du vent et la force du vent, et pour recevoir les données de prévision météorologique et des moments ou des périodes de temps futurs peuvent être sélectionnés au moyen de l'interface d'entrée (20) et les moyens de traitement de données (26) sont mis au point pour prévoir, sur la base des données de prévision météorologique ainsi que des données de capteur stockées, des données de capteur futures pour le moment sélectionné ou la période de temps sélectionnée et les envoyer en tant que signaux d'affichage par l'intermédiaire de l'interface d'affichage (18) avec une carte pour la représentation sur un affichage (24).

13. Dispositif selon l'une quelconque des revendications 9 à 12, dans lequel les moyens de traitement de données sont mis au point pour envoyer avec l'interface d'affichage (18) des signaux d'affichage de ce type pour piloter l'affichage (24) de telle sorte qu'il est notifié sur l'affichage (24) par des couleurs différentes si les données de capteur (16) représentées sont des données de capteur qui se situent avant un moment actuel, qui se situent après un moment actuel ou qui se situent dans un moment actuel.

14. Dispositif selon l'une quelconque des revendications 9 à 13, dans lequel les moyens de traitement de données (26) sont mis au point pour déterminer d'autres valeurs, en particulier des valeurs moyennes de la puissance, des vitesses du vent et/ou de la puissance répartie dans l'extrait de carte, à partir de plusieurs valeurs de capteur du moment sélectionné et pour envoyer les autres valeurs avec l'interface d'affichage (18) conjointement avec les signaux pour les données de capteur du moment sélectionné ou de la période de temps sélectionnée pour la représentation sur l'affichage (24).

15. Système avec plusieurs éoliennes (100) et/ou parcs éoliens (112) et un dispositif (12) selon l'une quelconque des revendications 9 à 14, dans lequel le dispositif (12) est raccordé au moyen d'une interface de données (10) aux éoliennes (100) par l'intermédiaire d'une connexion de données.
